# FASCICULE DE BREVET EUROPEEN

(11) **EP 1 283 976 B1**
(45) Date de publication et mention de la délivrance du brevet: **19.07.2006**
(21) Numéro de dépôt: 01938338.9
(22) Date de dépôt: 25.05.2001
(51) Int. Cl.: F28D 9/04

(54) **PERFECTIONNEMENTS AUX ECHANGEURS THERMIQUES DE TYPE SPIRALE**
VERBESSERTER SPIRALWÄRMETAUSCHER
IMPROVEMENTS TO SPIRAL HEAT EXCHANGERS

(30) Priorité: 26.05.2000 FR 0006779
(43) Date de publication de la demande: 19.02.2003
(73) Titulaire: Spirec (Societe Anonyme), 95100 Argenteuil (FR)
(72) Inventeur: GUEGUEN, Jean-Marie, F-78600 Maison-Laffitte (FR)
(74) Mandataire: Puiroux, Guy
(86) Numéro de dépôt international: PCT/FR2001/001619
(87) Numéro de publication internationale: WO 2001/092805

(56) Documents cités:
- DE-A- 3 031 698
- FR-A- 489 717
- FR-A- 2 096 719
- US-A- 2 017 201
- US-A- 2 129 300
- US-A- 2 657 018
- US-A- 4 274 186
- PATENT ABSTRACTS OF JAPAN vol. 004, no. 176 (M-045), 5 décembre 1980 (1980-12-05) -& JP 55 123993 A (HISAKA WORKS LTD), 24 septembre 1980 (1980-09-24)

## Description

La présente invention concerne les échangeurs, et notamment les échangeurs destinés à assurer un échange thermique entre deux fluides devant être séparés l'un de l'autre tels que les échangeurs spiralés du type réalisés par enroulement de tôles métalliques. Un tel échangeur est connu du JP 55123993.

On connaît des échangeurs de ce type qui sont constitués à partir d'une feuille de tôle pliée qui est enroulée sur elle-même autour de la pliure. Au cours de la phase d'enroulement on dispose entre les différentes spires de l'échangeur des éléments écarteurs destinés à espacer les tôles les unes des autres de façon à autoriser un écoulement de fluide entre ces diverses spires. L'extrémité de l'échangeur ainsi que les bords des feuilles formant les spires doivent en conséquence être obturés, ce que l'on réalise habituellement par des cordons de soudure. Un tel échangeur est ainsi constitué de deux circuits indépendants dans lesquels peuvent circuler des fluides, et notamment des liquides, à savoir d'une part l'espace compris entre les diverses spires, et d'autre part l'espace compris entre les deux parois pliées de chaque spire.

Un tel échangeur, s'il donne toute satisfaction en ce qui concerne son fonctionnement, présente des inconvénients en ce qui concerne son mode de fabrication, et plus spécifiquement en ce qui concerne la réalisation des deux cordons de soudure destinés à réunir les bords des deux feuilles de tôle formant les spires. En effet, la forme de ces cordons de soudure est particulièrement complexe car ils doivent suivre la forme spiralée des tôles. Cette opération de soudure constitue donc une opération difficile que l'on est ainsi contraint d'effectuer par des moyens manuels.

La présente invention a pour but de remédier à cet inconvénient en proposant un nouveau type d'échangeur métallique spiralé qui est également obtenu par enroulement de tôle mais qui présente l'avantage de pouvoir être réalisé par des moyens automatisés, dans la mesure où les opérations requises sont d'une mise en oeuvre simple.

La présente invention a ainsi pour objet un échangeur de type spiralé, constitué d'une série de spires espacées les unes des autres par des éléments écarteurs, dans lequel les spires sont formées d'un élément tubulaire aplati qui est enroulé et qui est constitué d'au moins une feuille d'un matériau dont les bords sont réunis de façon étanche par des moyens de liaison qui s'étendent parallèlement à l'axe longitudinal de la feuille, caractérisé en ce que l'élément tubulaire aplati comporte sur ses faces externes des nervures inclinées par rapport à son axe transversal.

La présente invention est particulièrement intéressante en ce qu'elle permet de remplacer deux cordons de soudure qui, suivant l'état antérieur de la technique, étaient en forme de spirale, par un ou plusieurs cordons de soudure parfaitement rectilignes, ce qui permet de simplifier de façon particulièrement conséquente l'opération de fabrication en permettant notamment de mettre en oeuvre celle-ci par des moyens automatisés.

L'élément tubulaire peut être formé à partir d'une feuille de métal qui est pliée suivant son axe longitudinal de telle façon que ses bords soient réunis par des moyens de maintien et d'étanchéité. Préférentiellement les moyens de maintien et d'étanchéité pourront être disposés suivant l'axe longitudinal central de la feuille de métal.

Dans un autre mode de mise en oeuvre de l'invention l'élément tubulaire sera formé à partir de deux feuilles de métal superposées qui seront réunies par leurs bords latéraux par des moyens de maintien et d'étanchéité.

Ces derniers seront la plupart du temps constitués par un cordon de soudure.

L'élément tubulaire aplati comportera, sur ses faces externes, des nervures inclinées par rapport à son axe transversal. Ces nervures seront formées sur la feuille de métal constituant l'élément tubulaire par un procédé de déformation de celle-ci et notamment par un procédé d'emboutissage.

Dans un mode de mise en oeuvre de l'invention permettant de doubler la distance de parcours d'un circuit de fluide, les bords de la feuille formant l'élément tubulaire aplati sont réunis à la paroi opposée de l'élément tubulaire, sur une partie de la longueur de celui-ci.

On remarquera que, suivant l'invention, le fait de donner aux nervures une inclinaison par rapport à l'axe transversal de l'élément tubulaire, permet d'être certain que, au cours de l'enroulement, certaines des diverses spires formées ne viennent pas en contact les unes avec les autres. En effet, cette inclinaison permet que, pour deux spires en contact, l'inclinaison se trouve opposée, si bien que l'on est sûr de l'écartement réellement obtenu. On obtient ainsi une grande régularité de la section de passage offerte au fluide, section de passage que l'on peut contrôler de façon rigoureuse lors de la fabrication, en jouant bien entendu sur la hauteur des nervures.

L'inclinaison des nervures a également pour effet d'améliorer la rigidité de la structure de l'échangeur une fois celui-ci enroulé.

Enfin, sur le plan du fonctionnement de l'échangeur, l'inclinaison des nervures a également un effet bénéfique, en ce sens qu'elle permet d'augmenter les effets de turbulences en cours d'écoulement, si bien que l'on améliore ainsi le contact du fluide contre la paroi. L'échange thermique se trouve ainsi très nettement amélioré.

Par ailleurs on sait que, pour certaines applications particulières, il s'avère intéressant de pouvoir contrôler la section de passage effective qui existe dans les deux circuits véhiculant les flux respectifs de l'échangeur. La présente invention est particulièrement intéressante en ce qu'elle permet de réaliser deux circuits dont les sections de passage sont à la fois parfaitement contrôlées et différentes.

La présente invention a également pour objet un procédé de fabrication d'un échangeur de type spiralé constitué par enroulement d'au moins une feuille, dans lequel on constitue un élément tubulaire aplati à partir d'au moins une feuille, dont les bords sont réunis de façon étanche par des moyens de liaison qui s'étendent parallèlement à l'axe longitudinal de la feuille, et l'on enroule sur lui-même cet élément tubulaire afin de former une série de spires, caractérisé en ce qu'il comporte une étape au cours de laquelle on réalise des éléments écarteurs sur les spires..

On décrira ci-après, à titre d'exemples non limitatifs, diverses formes d'exécution de la présente invention, en référence au dessin annexé sur lequel :
La figure 1 est une vue partielle en plan d'une feuille de métal destinée à constituer un échangeur suivant l'invention, qui est représentée avant le pliage préalable à son enroulement.
La figure 2 est une vue schématique en perspective montrant les diverses phases de pliage à réaliser sur une bande de métal, préalablement à l'opération d'enroulement.
La figure 3 est une vue partielle en plan de la feuille de métal représentée sur la figure 1 après l'opération de pliage.
La figure 4 est une vue partielle en perspective de la feuille pliée représentée sur la figure 3.
La figure 5 est une vue en perspective d'un ensemble constitué de la feuille métallique pliée puis enroulée et de deux admissions d'entrée/sortie de l'échangeur suivant l'invention.
La figure 6 est une vue en perspective d'une variante de mise en oeuvre d'une feuille de métal destinée à constituer un échangeur suivant l'invention après l'opération de pliage et de soudage.
La figure 7 est une vue en coupe transversale de la feuille de métal pliée représentée sur la figure 6 suivant l'axe VII-VII de celle-ci.
La figure 8 est une vue en coupe transversale de la feuille de métal pliée représentée sur la figure 6 suivant l'axe VIII-VIII de celle-ci.
La figure 9 est une vue en section droite d'une variante de mise en oeuvre de l'invention représentant deux feuilles de métal assemblées avant l'opération d'enroulement.
La figure 10 est une vue schématique d'une variante de réalisation d'un échangeur suivant l'invention.
L'échangeur spiralé métallique suivant l'invention est constitué à partir d'une feuille 1 métallique, notamment en acier inoxydable, qui se présente à l'utilisateur sous la forme d'un rouleau 2. On réalise sur la feuille 1 des nervures 3 qui sont obtenues par emboutissage. Ces nervures 3 forment un certain angle d'incidence i avec l'axe transversal xx' de la feuille 1 qui, dans le présent mode de mise en oeuvre, est de l'ordre de 45°. Les nervures 3 se répartissent sur trois zones transversales, à savoir une première zone latérale 3a de longueur sensiblement égale au quart de la largeur e de la feuille 1, une zone centrale 3b de longueur sensiblement égale à la moitié de celle-ci et enfin une troisième zone latérale 3c de longueur sensiblement égale au quart de celle-ci. La hauteur h de ces nervures 3 est égale à la moitié de l'espace que l'on souhaite prévoir entre les spires une fois l'opération d'enroulement terminée. En effet l'inclinaison i des nervures par rapport à l'axe transversal xx' de la feuille 1 permet que, lors de l'enroulement, les nervures 3 de la face interne d'une spire viennent en appui sur les nervures 3 de la face externe de la spire précédente, puisque ces nervures respectives se croisent lors de l'enroulement. Ce mode de mise en oeuvre est intéressant en ce qu'il permet d'obtenir, lors du pliage, une superposition des hauteurs h des nervures réalisées respectivement sur le pli de base 1' et sur les plis 1", sans qu'il soit nécessaire pour cela de calculer et définir un écartement spécifique suivant l'axe longitudinal yy' de la feuille de tôle 1.

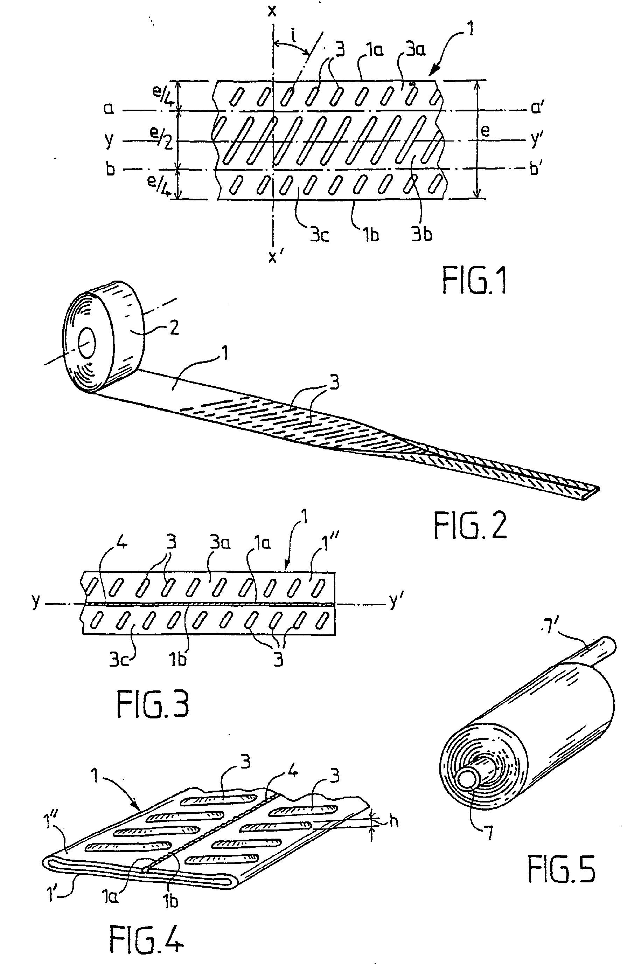

Ainsi que représenté sur les figures schématiques 1 et 2 la feuille 1 est pliée suivant deux axes longitudinaux respectifs aa' et bb' qui sont respectivement disposés à une distance e/4 des bords latéraux 1a et 1b de la feuille 1. Après pliage, ainsi que représenté sur les figures 3 et 4, les bords latéraux respectifs 1a et 1b se trouvent en vis-à-vis et disposés suivant l'axe longitudinal et central yy' de la feuille 1. Après un tel pliage, la feuille 1 forme ainsi trois plis, ainsi que représenté sur la figure 4, à savoir un pli de base 1' et deux plis supérieurs 1". Les plis supérieurs 1" se trouvent écartés du pli de base 1' de façon à créer, entre les faces internes de ces plis, un passage dans lequel sera admis l'un des fluides de l'échangeur. Les bords latéraux 1a et 1b des deux plis supérieurs sont réunis ensuite par un cordon de soudure rectiligne 4, ce qui constitue une opération facile à réaliser par des moyens automatisés même simplifiés.

La tôle pliée est ensuite enroulée sur elle-même dans un sens tel que le cordon de soudure 4 se trouve à l'intérieur de l'enroulement. Celui-ci une fois effectué, on dispose d'un élément qui est susceptible, après diverses opérations d'adaptation, de constituer l'échangeur.

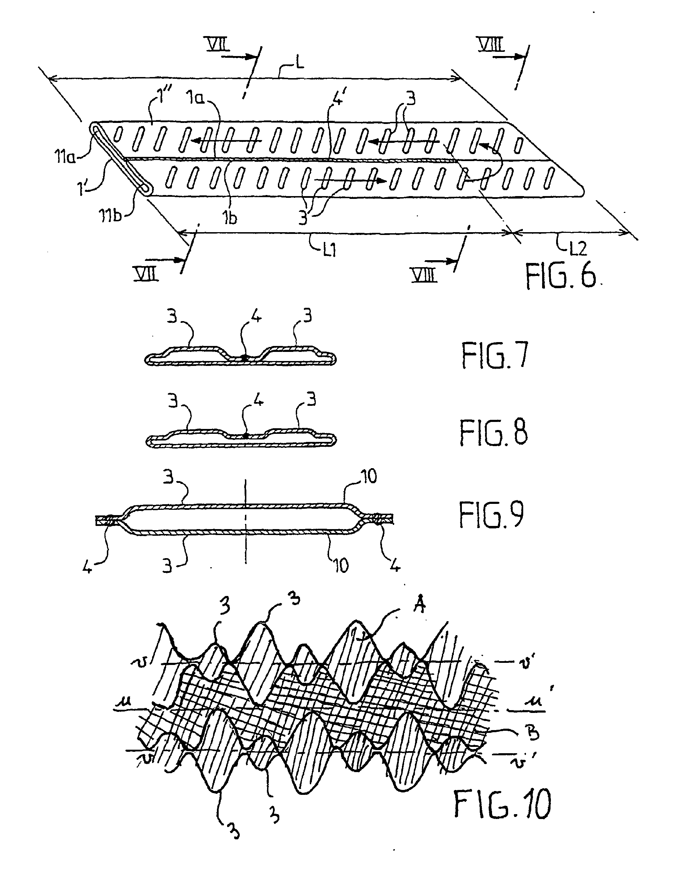

Ces opérations consistent, de façon connue dans ce type de produit, à créer une entrée et une sortie pour chacun des deux circuits indépendants. Ainsi le premier circuit, qui est constitué par l'espace existant entre les plis 1' et 1" formant chaque spire, est pourvu ainsi que représenté sur la figure 5, d'une première entrée/sortie qui est constituée d'un tube 7 connecté au centre de l'échangeur et d'une seconde entrée/sortie constituée d'un tube 7' qui est connecté à la périphérie de celui-ci. Le second circuit quant à lui est constitué par les espaces compris entre les différentes spires.

Dans une variante de mise en oeuvre de la présente invention on peut doubler la distance parcourue par le fluide dans le premier circuit, c'est-à-dire dans celui compris entre les plis l'et 1". On se reportera ainsi aux figures 6 à 8 qui représentent, de façon schématique, une feuille de tôle destinée à constituer un échangeur, après pliage et avant l'enroulement. Suivant cette variante on réunit sur la plus grande partie L1 de la longueur L de la tôle pliée les deux extrémités 1a et 1b des plis 1" supérieurs au pli inférieur 1' de façon à constituer ainsi deux canaux qui se trouvent en parallèle. Sur la longueur restante L2, les bords 1a et 1b seront seulement reliés entre eux de façon à constituer un passage entre les deux canaux. Dans ces conditions, en ce qui concerne ce second circuit, l'admission du fluide se fera par l'une de ses deux faces d'entrée/sortie 11a et la sortie de celui-ci se fera par l'autre entrée/sortie 11b. Une telle disposition permet de doubler le parcours de fluide dans ce circuit, ce qui améliore l'échange thermique. Par ailleurs cela permet également de réaliser une admission et une sortie du fluide à partir du centre de l'échangeur, le tube 7' étant alors, dans ce mode de mise en oeuvre, coaxial à l'entrée/sortie 7.

Dans une variante de ce mode de mise en oeuvre de l'invention on pourra remplacer la soudure des deux faces latérales 1a et 1b sur le pli de base 1' par un joint élastique qui sera disposé entre les deux bords latéraux 1a et 1b sur la longueur L1 précédemment mentionnée.

La présente invention est particulièrement intéressante en ce que l'on a constaté que les nervures 3 qui sont destinées à réaliser un écartement donné déterminé entre les différentes spires de l'échangeur permettent, en raison de la possibilité de déformation qu'elles permettent d'atteindre dans le sens longitudinal, aux deux plis des tôles inférieure et supérieure de se déformer l'une par rapport à l'autre ainsi que l'exige l'augmentation de rayon de courbure de ces deux plis respectifs qui se manifeste lors de l'enroulement.

Dans un autre mode de mise en oeuvre de l'invention, qui est représenté sur la figure 9, on ne fait pas appel à une feuille de tôle pliée mais à deux feuilles distinctes 10 qui, après formation des nervures 3, sont assemblées au moyen notamment d'un cordon de soudure 4 qui est disposé longitudinalement le long de chacun des bords transversaux (1a,1b).

On peut également bien entendu obtenir cet élément à partir d'un élément tubulaire que l'on déformera.

La présente invention, ainsi que mentionné précédemment, permet de réaliser deux circuits de circulation de fluides dont les sections droites de passage soit différentes l'une de l'autre, ce qui est intéressant dans le cadre de certaines applications de l'échangeur.

On a représenté, de façon très schématique sur la figure 10 un tel mode de mise en oeuvre de l'invention. Sur celle-ci, on a respectivement désigné par A (hachures simples) et B (hachures croisées) les deux circuits de fluide de l'échangeur.

On a représenté par la ligne uu' le plan de contact des sommets de deux spires successives et par vv' le plan de contact de deux éléments soudés formant une spire. La figure 10 représente l'ensemble des éléments avant l'opération d'enroulement.

Suivant ce mode de mise en oeuvre la hauteur de deux nervures successives h_{B1} et h_{B2} est différente. Il en résulte que, ainsi que représenté sur la figure 10, la section de passage du circuit B est supérieure à celle du circuit A. En jouant sur la différence des hauteurs h_{B1} et h_{B2} des nervures 3, on pourra ainsi contrôler cette différence de section de passage, et donc de perte de charge, offerte aux fluides respectifs par les deux circuits.

Bien que les différents modes de mise en oeuvre de l'invention précédemment décrits fassent appel à des feuilles métalliques, on pourra également, pour certains types d'application, utiliser des feuilles d'autres matériaux et notamment des feuilles en matériau de synthèse.

## Revendications

1. Echangeur de type spiralé, constitué d'une série de spires espacées les unes des autres par des éléments écarteurs (3), dans lequel les spires sont formées d'un élément tubulaire aplati qui est enroulé et qui est constitué d'au moins une feuille d'un matériau (1) dont les bords (1a,1b) sont réunis de façon étanche par des moyens de liaison (4) qui s'étendent parallèlement à l'axe longitudinal (yy') de la feuille (1), **caractérisé en ce que** les éléments écarteurs (3) sont des nervures réalisées sur les faces externes de l'élément tubulaire aplati et sont inclinés par rapport à son axe transversal (xx') et sont tels que pour deux spires en contact, leur inclinaison se trouve opposée.

2. Echangeur suivant la revendication 1, **caractérisé en ce que** l'élément tubulaire est formé à partir d'une feuillue (1) qui est pliée suivant son axe longitudinal (yy') de telle façon que ses bords (1a,1b) soient réunis par des moyens (4) de maintien et d'étanchéité.

3. Echangeur suivant la revendication 2, **caractérisé en ce que** les moyens de maintien et d'étanchéité sont disposés suivant l'axe longitudinal central (yy') de la feuille.

4. Echangeur suivant la revendication 1, **caractérisé en ce que** l'élément tubulaire est formé à partir de deux feuillues (10) superposées qui sont réunies par leurs bords latéraux (1a,1b) par des moyens de maintien et d'étanchéité (4).

5. Echangeur suivant l'une des revendications 1 à 4, **caractérisé en ce que** les moyens de maintien et d'étanchéité sont constitués d'un cordon de soudure (4).

6. Echangeur suivant l'une des revendications précédantes, **caractérisé en ce que** les nervures (3) sont formées sur la feuille (1) constituant l'élément tubulaire par un procédé de déformation de celle-ci et notamment un procédé d'emboutissage.

7. Echangeur suivant l'une des revendications précédantes, **caractérisé en ce que** les bords (1a,1b) de la feuille (1) formant l'élément tubulaire aplati sont réunis à la paroi opposée de l'élément tubulaire, sur une partie (L1) de la longueur (L) de celui-ci.

8. Echangeur suivant l'une des revendications précédentes, **caractérisé en ce que** la feuille (1) est une feuille métallique.

9. Procédé de fabrication d'un échangeur de type spiralé constitué par enroulement d'au moins une feuille (1), dans lequel on constitue un élément tubulaire aplati à partir d'au moins une feuille (1), dont les bords (1a,1b) sont réunis de façon étanche par des moyens de liaison (4) qui s'étendent parallèlement à l'axe longitudinal (yy') de la feuille (1), et l'on enroule sur lui-même cet élément tubulaire afin de former une série de spires, **caractérisé en ce que** l'on réalise l'élément tubulaire aplati à partir d'une feuille pourvue de nervures inclinées par rapport à l'axe transversal de la feuille, de telle manière que, l'inclinaison des nervures réalisées sur les faces externes de l'élément tubulaire aplati soit, pour 2 spires en contact, opposée.

10. Procédé suivant la revendication 9, **caractérisé en ce que** l'on forme l'élément tubulaire à partir d'une feuille (1) que l'on plie suivant son axe longitudinal (yy') de telle façon que ses bords (1a,1b) soient réunis par des moyens de maintien et d'étanchéité (4).

11. Procédé suivant la revendication 9, **caractérisé en ce que** l'on réalise l'élément tubulaire à partir de deux feuilles (10) que l'on superpose et que l'on réunit par leurs bords latéraux (1a,1b) à l'aide des moyens de maintien et d'étanchéité (4).

12. Procédé suivant l'une des revendications 9 à 11, **caractérisé en ce que** l'on crée les éléments écarteurs (3) par une technique de déformation, telle que notamment l'emboutissage, sur la feuille (1) avant le pliage de celle-ci.

## Claims

1. An exchanger of the spiral type, composed of a series of turns spaced from each other by separating elements (3), in which the turns are formed from a flattened tubular element which is rolled and which is composed of at least one sheet of a material (1) whose edges (1a, 1b) are joined in a sealed manner by connecting resources (4) which lie parallel to the longitudinal axis (yy') of the sheet (1), **characterised in that** the separating element (3) are ribs created on the outer faces of the flattened tubular element, which are inclined in relation to its transverse axis (xx'), and are such that for any two turns in contact, their slopes are opposed.

2. An exchanger according to claim 1, **characterised in that** the tubular element is formed from a sheet (1) which is folded along its longitudinal axis (yy') in such a manner that its edges (1a, 1b) are joined by retention and sealing resources (4).

3. An exchanger according to claim 2, **characterised in that** the retention and sealing resources are positioned along the central longitudinal axis (yy') of the sheet.

4. An exchanger according to claim 1, **characterised in that** the tubular element is formed from two superimposed sheets (10) which are joined by their lateral edges (1a, 1b) by retention and sealing resources (4).

5. An exchanger according to one of claims 1 to 4, **characterised in that** the retention and sealing resources are composed of a bead of solder (4).

6. An exchanger according to one of the preceding claims, **characterised in that** the ribs (3) are formed on the sheet (1) constituting the tubular element by a process of deformation of the latter, and in particular by a cold pressing process.

7. An exchanger according to one of the preceding claims, **characterised in that** the edges (1a, 1b) of the sheet (1) forming the flattened tubular element are joined to the opposite wall of the tubular element, over a part (L1) of the length (L) of the latter.

8. An exchanger according to one of the preceding claims, **characterised in that** the sheet (1) is a metal sheet.

9. A process for the manufacture of an exchanger of the spiral type, composed by the rolling of at least one sheet (1), in which a flattened tubular element is created from at least one sheet (1) whose edges (1a, 1b) are joined in a sealed manner by connecting resources (4) which lie parallel to the longitudinal axis (yy') of the sheet (1), and this tubular element is rolled upon itself in order to form a series of turns, **characterised in that** the flattened tubular element is created from a sheet on which sloped ribs have been created in relation to the transverse axis of the sheet in such a manner that the slope of the ribs created on the outer faces of the flattened tubular element are opposed for any two turns in contact.

10. A process according to claim 9, **characterised in that** the tubular element is formed from a sheet (1) which is folded along its longitudinal axis (yy') in such a manner that its edges (1a, 1b) are joined by retention and sealing resources (4).

11. A process according to claim 9, **characterised in that** the tubular element is made from two sheets (10) which are superimposed, and which are joined by their lateral edges (1a, 1b) by means of retention and sealing resources (4).

12. A process according to one of claims 9 to 11, **characterised in that** the separating elements (3) are created by a deformation technique, such as cold pressing in particular, applied to the sheet (1) before bending the latter.

## Patentansprüche

1. Wärmetauscher vom spiralförmigen Typ, der aus einer Reihe von spiralförmigen Windungen besteht, die durch Abstandhalterelemente (3) mit Abstand zueinander angeordnet sind, wobei die spiralförmigen Windungen aus einem abgeflachten rohrförmigen Element bestehen, das aufgerollt ist und das aus mindestens einer Materialfolie (1) besteht, deren Kanten (1a, 1b) durch Verbindungseinrichtungen (4) dicht zusammengefügt sind, die sich parallel zur Längsachse (yy') der Folie (1) erstrecken, **dadurch gekennzeichnet, dass** die Abstandhalterelemente (3) Rippen sind, die auf den Außenflächen des abgeflachten rohrförmigen Elementes ausgebildet sind und die bezüglich dessen Querachse (xx') geneigt und derart beschaffen sind, dass für zwei in Kontakt miteinander befindliche spiralförmige Windungen deren Neigung entgegengesetzt ist.

2. Wärmetauscher nach Anspruch 1, **dadurch gekennzeichnet, dass** das rohrförmige Element aus einer Folie (1) ausgebildet ist, die entlang ihrer Längsachse (yy') umgefaltet ist, derart dass deren Kanten (1a, 1b) durch Halte- und Abdichtungseinrichtungen (4) zusammengefügt sind.

3. Wärmetauscher nach Anspruch 2, **dadurch gekennzeichnet, dass** die Halte- und Abdichtungseinrichtungen entlang der Längsachse (yy') der Folie angeordnet sind.

4. Wärmetauscher nach Anspruch 1, **dadurch gekennzeichnet, dass** das rohrförmige Element ausgehend von zwei übereinander angeordneten Folien (10) ausgebildet ist, die mit ihren Seitenkanten (1a, 1b) mittels Halte- und Abdichtungseinrichtungen (4) zusammengefügt sind.

5. Wärmetauscher nach einem der Ansprüche 1 bis 4, **dadurch gekennzeichnet, dass** die Halte- und Abdichtungseinrichtungen aus einer Schweißnaht (4) bestehen.

6. Wärmetauscher nach einem der vorhergehenden Ansprüche, d**adurch gekennzeichnet, dass** die Rippen (3) auf der das rohrförmige Element bildenden Folie (1) mittels eines Verfahrens zur Verformung von dieser, und insbesondere mittels eines Tiefziehverfahrens ausgebildet sind.

7. Wärmetauscher nach einem der vorhergehenden Ansprüche, **dadurch gekennzeichnet, dass** die Kanten (1a, 1b) der das abgeflachte rohrförmige Element bildenden Folie (1) mit der gegenüberliegenden Wand des rohrförmigen Elementes über einen Teil (L1) von deren Länge (L) zusammengefügt sind.

8. Wärmetauscher nach einem der vorhergehenden Ansprüche, **dadurch gekennzeichnet, dass** die Folie (1) eine Metallfolie ist.

9. Verfahren zur Herstellung eines Wärmetauschers vom spiralförmigen Typ, der durch ein Aufrollen von mindestens einer Folie (1) gebildet ist, bei dem ein abgeflachtes rohrförmiges Element ausgehend von mindestens einer Folie (1) gebildet wird, deren Kanten (1a, 1b) durch Verbindungseinrichtungen (4) dicht zusammengefügt werden, die parallel zur Längsachse (yy') der Folie (1) verlaufen, und dieses rohrförmige Element auf sich selber aufgerollt wird, um eine Reihe von spiralförmigen Windungen zu bilden, **dadurch gekennzeichnet, dass** das abgeflachte rohrförmige Element ausgehend von einer Folie realisiert wird, die mit Rippen versehen ist, welche bezüglich der Querachse der Folie geneigt sind, und zwar derart, dass die Neigung der auf den Außenflächen des rohrförmigen abgeflachten Elementes ausgebildeten Rippen für zwei in Kontakt befindliche spiralförmige Windungen entgegengesetzt ist.

10. Verfahren nach Anspruch 9, **dadurch gekennzeichnet, dass** das rohrförmige Element ausgehend von einer Folie (1) ausbildet wird, die entlang ihrer Längsachse (yy') umgefaltet wird, derart dass deren Kanten (1a, 1b) durch Halte- und Abdichtungseinrichtungen (4) zusammengefügt werden.

11. Verfahren nach Anspruch 9, **dadurch gekennzeichnet, dass** das rohrförmige Element ausgehend von zwei Folien (10) realisiert wird, die übereinander angeordnet werden und an ihren Seitenkanten (1a, 1b) mittels Halte- und Abdichtungseinrichtungen (4) zusammengefügt werden.

12. Verfahren nach einem der Ansprüche 9 bis 11, **dadurch gekennzeichnet, dass** die Abstandhalterelemente (3) mittels eines Verformungsverfahrens, beispielsweise insbesondere Tiefziehen, auf der Folie (1) vor dem Umfalten von dieser erzeugt werden.
